(19) Europäisches Patentamt
European Patent Office
Office européen des brevets

(11) EP 0 614 922 B1

(12) **EUROPÄISCHE PATENTSCHRIFT**

(45) Veröffentlichungstag und Bekanntmachung des Hinweises auf die Patenterteilung:
**06.09.2000 Patentblatt 2000/36**

(51) Int. Cl.[7]: **C08F 291/00**, C08F 265/06, C08F 2/22

(21) Anmeldenummer: **94103275.7**

(22) Anmeldetag: **04.03.1994**

(54) **Verfahren zur Herstellung einer wässrigen Polymerisatdispersion**
Process for the preparation of an aqueous polymer dispersion
Procédé de préparation d'une dispersion aqueuse de polymère

(84) Benannte Vertragsstaaten:
**BE DE ES FR GB IT NL SE**

(30) Priorität: **11.03.1993 DE 4307683**

(43) Veröffentlichungstag der Anmeldung:
**14.09.1994 Patentblatt 1994/37**

(73) Patentinhaber:
**BASF AKTIENGESELLSCHAFT**
**67056 Ludwigshafen (DE)**

(72) Erfinder:
- **Aydin, Oral, Dr.**
  **D-68165 Mannheim (DE)**
- **Neutzner, Josef, Dr.**
  **D-67434 Neustadt (DE)**
- **Maechtle, Walter, Dr.**
  **D-67067 Ludwigshafen (DE)**

(56) Entgegenhaltungen:
**EP-A- 0 081 083** **EP-A- 0 129 699**
**EP-A- 0 387 855**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 614 922 B1

## Beschreibung

Die vorliegende Erfindung betrifft ein neues Verfahren zur Herstellung einer wäßrigen Polymerisatdispersion, die eine Feststoffvolumenkonzentration von wenigstens 50 Vol.-% aufweist (Feststoffvolumen = Feststoffmasse dividiert durch Feststoffdichte), bei dem wenigstens ein von Vinyl- und Vinylidenhalogeniden verschiedenes radikalisch polymerisierbares Monomeres unter Zusatz wenigstens einer wäßrigen Polymerisatausgangsdispersion I in einem Polymerisationsgefäß nach dem Verfahren der radikalischen wäßrigen Emulsionspolymerisation in Gegenwart von Dispergiermitteln und radikalischen Polymerisationsinitiatoren polymerisiert wird.

Ebenso wie Polymerisatlösungen beim Verdampfen des Lösungsmittels, weisen wäßrige Polymerisatdispersionen beim Verdampfen des wäßrigen Dispersionsmediums die Eigenschaft auf, Polymerisatfilme zu bilden, weshalb wäßrige Polymerisatdispersionen in vielfacher Weise als Bindemittel, z.B. für Anstrichfarben oder für Massen zum Beschichten von Leder, Papier oder Kunststoffolien Anwendung finden.

Wäßrige Polymerisatdispersionen mit hohem Polymerisatanteil sind insofern von besonderem Vorteil, als einerseits ihr relativ geringerer Anteil an wäßrigem Dispersionsmedium den Aufwand für das Verdampfen desselben, z.B. zur Filmbildung oder zur Herstellung von Polymerpulvern, reduziert und andererseits der Wertstoff Polymerisat in Anwendung einer relativ geringeren Menge wäßriger Phase als Trägermedium gelagert und transportiert werden kann.

Von Nachteil ist jedoch, daß mit zunehmender Volumenkonzentration (US-A 4,130,523) des Polymerisats die Herstellung wäßriger Polymerisatdispersionen problembehaftet ist. So nimmt einerseits der Fließwiderstand (die Viskosität) zu und erschwert sowohl die Abführung der Reaktionswärme als auch die Verarbeitung der wäßrigen Dispersion und andererseits wächst die Neigung der dispergierten Polymerisatteilchen sich aus Gründen der thermodynamischen Stabilität zusammenzulagern. Die dabei entstehenden Ausflockungen [a) Mikroflockungen oder Stippen; sie können durch herkömmliche Filtration in der Regel nicht abgetrennt werden; b) Makroflockungen oder Koagulat; ist normalerweise durch übliche Filtration abtrennbar;] führen insbesondere zu Störungen in den Verfilmungen der wäßrigen Polymerisatdispersionen und sind daher in der Regel unerwünscht.

Nach Untersuchungen über den Fließwiderstand wäßriger Polymerisatdispersionen weisen solche mit einer breiten Größenverteilung (polydispers) der dispergierten Polymerisatteilchen bei gleichem Feststoffgehalt in der Regel einen geringeren Fließwiderstand auf, als solche mit einer engen Größenverteilung (im Grenzfall monodispers). Ferner zeigen grobteilige wäßrige Polymerisatdispersionen unter der Prämisse gleichen Feststoffgehalts einen geringeren Fließwiderstand als feinteilige wäßrige Polymerisatdispersionen.

Aus der EP-A 129 699 ist ein Verfahren zur Herstellung einer wäßrigen Polymerisatdispersion bekannt, bei dem man in einem Polymerisationsgefäß nach dem Verfahren der radikalischen wäßrigen Emulsionspolymerisation ungesättigte Monomere in an sich bekannter Weise polymerisiert und dabei eine wäßrige Dispersion eines Ausgangspolymerisats zusetzt, wobei der Zusatz der wäßrigen Dispersion des Ausgangspolymerisats abgeschlossen sein muß, bevor 40 Gew.-% der insgesamt zu polymerisierenden Monomeren einpolymerisiert sind sowie frühestens dann erfolgen darf, wenn die mittlere Teilchengröße des bei der Polymerisation der Monomeren entstehenden Emulsionspolymerisats den zweifachen Wert der mittleren Teilchengröße der wäßrigen Dispersion des Ausgangspolymerisats aufweist. Vorzugsweise wird dabei die wäßrige Dispersion des Ausgangspolymerisats nicht über einen längeren Zeitraum, sondern auf einmal zugegeben.

Nachteilig an den so erhältlichen wäßrigen Polymerisatdispersionen ist, daß ihr Fließwiderstand oberhalb einer Feststoffvolumenkonzentration von 50 Vol.-% nicht voll zu befriedigen vermag und gemäß den Ausführungsbeispielen die Feststoffvolumenkonzentration auf Werte unter 65 Vol.-% beschränkt ist.

Die US-A 4,130,523 betrifft ein Verfahren zur Herstellung wäßriger Polymerisatdispersionen, bei dem während des Polymerisationsprozesses laufend bereits gebildete wäßrige Polymerisatdispersion aus der Reaktionszone entfernt, gelagert und später der Reaktionszone als eine Art Ausgangspolymerisatdispersion wieder zugeführt wird. Nachteilig an diesem Verfahren ist, daß es für eine großtechnische Realisierung ungeeignet ist.

Die US-A 3,424,706 bezieht sich auf ein Verfahren zur Herstellung wäßriger Polymerisatdispersionen, deren Polymerisate wenigstens 70 bis 97 Gew.-% Vinylidenchlorid einpolymerisiert enthalten, bei dem die Polymerisation der Monomeren unter Zusatz einer wäßrigen Dispersion eines Ausgangspolymerisats erfolgt. Unter anderem enthält die US-A 3,424,706 den Hinweis, die zu polymerisierenden Monomeren und die wäßrige Dispersion des Ausgangspolymerisats miteinander zu vermischen und dieses Gemisch der einen Teil des Polymerisationsansatzes umfassenden Vorlage zuzuführen.

Nachteilig an diesem Verfahren ist, daß es auf Monomerengemische beschränkt ist, die hauptsächlich Vinylidenchlorid enthalten. Darüber hinaus vermag gemäß den Ausführungsbeispielen auch bei den nach diesem Verfahren erhältlichen wäßrigen Polymerisatdispersionen sowohl der Fließwiderstand oberhalb einer Feststoffvolumenkonzentration von 50 Vol.-%, als auch die in noch befriedigend fließfähigem Zustand erreichbare Obergrenze der Feststoffvolumenkonzentration nicht zu befriedigen.

Die EP-A 81 083 offenbart ein Verfahren zur Herstellung einer wäßrigen hochkonzentrierten bimodalen Polymerisatdispersion, das dadurch gekennzeichnet ist, daß man ethylenisch ungesättigte Monomere unter Zusatz

einer wäßrigen Ausgangsdispersion A eines Ausgangspolymerisats A und einer wäßrigen Ausgangsdispersion B eines Ausgangspolymerisats B nach dem Verfahren der radikalischen wäßrigen Emulsionspolymerisation mit der Maßgabe polymerisiert, daß die gewichtsmittleren Durchmesser der Polymerisatteilchen A und B um einen Faktor 2 bis 15 voneinander verschieden sind und die Gewichtssumme der zugesetzten Ausgangspolymerisate A und B, bezogen auf das Gewicht des resultierenden Endpolymerisats, wenigstens 5 und höchstens 80 Gew.-% beträgt. Nachteilig an diesem Verfahren ist, daß es notwendigerweise der Herstellung zweier wäßriger Polymerisatausgangsdispersionen bedarf. Ferner werden befriedigende wäßrige Polymerisatdispersionen nach dieser Verfahrensweise offensichtlich nur dann erhalten, wenn die Gewichtssumme der zugesetzten Ausgangspolymerisate A und B, bezogen auf das Gewicht des resultierenden Endpolymerisats, wenigstens 60 Gew.-% beträgt. Zumindest genügen sämtliche Ausführungsbeispiele der EP-A 81 083 dieser Maßgabe.

Aus der GB-A 2 245 274 ist ein Verfahren zur Herstellung wäßriger Polymerisatdispersionen bekannt, deren Polymerisatteilchendurchmesser über einen breiten Bereich verteilt sind. Das Verfahren ist durch einen bestimmten Verlauf der Emulgatorkonzentration längs des Polymerisationspfades gekennzeichnet. Nachteilig an diesem Verfahren ist, daß es sich zur großtechnischen reproduzierbaren Herstellung wäßriger Polymerisatdispersionen mit einer Feststoffvolumenkonzentration ≥ 50 Vol.-% wenig eignet, weshalb auch die Feststoffvolumenkonzentration des einzigen Ausführungsbeispiels unterhalb von 20 Vol.-% liegt.

Die ältere Anmeldung DE-A 42 13 965 (O.Z. 0050/43182) betrifft ein Verfahren zur Herstellung einer wäßrigen Polymerisatdispersion, die eine Feststoffvolumenkonzentration von wenigstens 50 Vol.-% aufweist, das u.a. dadurch gekennzeichnet ist, daß man wenigstens ein radikalisch polymerisierbares Monomeres unter Zusatz einer wäßrigen Dispersion eines Ausgangspolymerisats nach der Methode der radikalischen wäßrigen Emulsionspolymerisation mit der Maßgabe polymerisiert, daß der gewichtsmittlere Teilchendurchmesser der Polymerisatteilchen der wäßrigen Dispersion des Ausgangspolymerisats ≤ 50 nm ist.

Die ältere Anmeldung DE-A 42 13 964 (O.Z. 0050/43183) betrifft ein Verfahren zur Herstellung einer wäßrigen Polymerisatdispersion, das u.a. dadurch gekennzeichnet ist, daß man radikalisch polymerisierbare Monomere unter Zusatz einer wäßrigen Dispersion eines Ausgangspolymerisats nach der Methode der radikalischen wäßrigen Emulsionspolymerisation mit der Maßgabe polymerisiert, daß der gewichtsmittlere Teilchendurchmesser der Polymerisatteilchen der wäßrigen Dispersion des Ausgangspolymerisats 10 bis 100 nm beträgt.

Die ältere Anmeldung DE-A 42 13 967 (O.Z. 0050/43184) betrifft ein Verfahren zur Herstellung einer wäßrigen Polymerisatdispersion, die eine Feststoffvolumenkonzentration von wenigstens 50 Vol.-% aufweist, das u.a. dadurch gekennzeichnet ist, daß man wenigstens ein radikalisch polymerisierbares Monomeres unter Zusatz wenigstens einer wäßrigen Ausgangsdispersion I eines Ausgangspolymerisats I und unter Zusatz wenigstens einer wäßrigen Ausgangsdispersion II eines Ausgangspolymerisats II nach der Methode der radikalischen wäßrigen Emulsionspolymerisation mit der Maßgabe polymerisiert, daß der gewichtsmittlere Teilchendurchmesser der Polymerisatteilchen der wäßrigen Ausgangsdispersion I ≤ 50 nm ist.

Die ältere Anmeldung DE-A 42 13 968 (O.Z. 0050/43185) betrifft ein Verfahren zur Herstellung einer wäßrigen Polymerisatdispersion, die eine Feststoffvolumenkonzentration von wenigstens 50 Vol.-% aufweist, das u.a. dadurch gekennzeichnet ist, daß man radikalisch polymerisierbare Monomere unter Zusatz wenigstens einer wäßrigen Ausgangsdispersion I eines Ausgangspolymerisats I und unter Zusatz wenigstens einer wäßrigen Ausgangsdispersion II eines Ausgangspolymerisats II nach der Methode der radikalischen wäßrigen Emulsionspolymerisation mit der Maßgabe polymerisiert, daß wenigstens 1 Gew.-% der Gesamtmasse der Ausgangspolymerisatteilchen I einen von Null verschiedenen Teilchendurchmesser ≤ 50 nm aufweist.

Die ältere Anmeldung DE-A 42 13 969 (O.Z. 0050/43186) betrifft ein Verfahren zur Herstellung einer wäßrigen Polymerisatdispersion, die eine Feststoffvolumenkonzentration von wenigstens 50 Vol.-% aufweist, das u.a. dadurch gekennzeichnet ist, daß man radikalisch polymerisierbare Monomere unter Zusatz wenigstens einer wäßrigen Ausgangsdispersion I eines Ausgangspolymerisats I nach der Methode der radikalischen wäßrigen Emulsionspolymerisation mit der Maßgabe polymerisiert, daß die wäßrige Ausgangsdispersion I sowohl Ausgangspolymerisatteilchen mit einem Durchmesser im Bereich von > 0 bis 100 nm als auch Ausgangspolymerisatteilchen mit einem Durchmesser im Bereich von > 100 nm bis 400 nm aufweist, wobei zwischen den Volumina der verschiedenen Polymerisatteilchenfraktionen bestimmte Beziehungen erfüllt sein müssen. In allen Ausführungsbeispielen umfaßt die Ausgangsdispersion I, bezogen auf die Gesamtmenge der Ausgangspolymerisate I, wenigstens 0,6 Gew.-% an Ausgangspolymerisatteilchen, deren Teilchendurchmesser im wesentlichen ≤ 40 nm beträgt.

Ziel der vorliegenden Erfindung war es, ein Verfahren zur Herstellung wäßriger Polymerisatdispersionen mit einer Feststoffvolumenkonzentration ≥ 50 Vol.-%, einem reduzierten Fließwiderstand sowie einem reduzierten Gehalt an Ausflockungen zur Verfügung zu stellen, bei welchem man wenigstens ein von Vinyl- und Vinylidenhalogeniden verschiedenes radikalisch polymerisierbares Monomeres unter Zusatz wenigstens einer wäßrigen Polymerisatausgangsdispersion I in einem Polymerisationsgefäß in einfacher, großtechnisch geeigneter, reproduzierbarer und nicht auf spezielle Monomere beschränkter Weise nach dem Verfahren der radikalischen wäßrigen Emulsionspolymerisation in Gegenwart von Dispergiermitteln und radikalischen Polymerisationsinitiatoren polymerisiert.

Demgemäß wurde ein Verfahren zur Herstellung einer wäßrigen Polymerisatenddispersion, die eine Feststoffvolumenkonzentration von wenigstens 50 Vol.-% aufweist, gefunden, bei dem wenigstens ein von Vinyl- und Vinylidenhalogeniden verschiedenes radikalisch polymerisierbares Monomeres unter Zusatz wenigstens einer wäßrigen Polymerisatausgangsdispersion I in einem Polymerisationsgefäß nach dem Verfahren der radikalischen wäßrigen Emulsionspolymerisation in Gegenwart von Dispergiermitteln und radikalischen Polymerisationsinitiatoren polymerisiert wird, das dadurch gekennzeichnet ist, daß

a) die in der wenigstens einen zugesetzten wäßrigen Polymerisatausgangsdispersion I, bezogen auf die Gesamtmasse, gebildet aus der Masse des wenigstens einen radikalisch polymerisierbaren Monomeren und der in Form der wäßrigen Polymerisatausgangsdispersion I zugesetzten Masse an Ausgangspolymerisat I, 0,1 bis 10, vorzugsweise 0,5 bis 5 % beträgt.
b) das Ausgangspolymerisat I in der wenigstens einen wäßrigen Ausgangsdispersion I in Form dispers verteilter Ausgangspolymerisatteilchen vorliegt, von deren Gesamtmasse wenigstens 99,6 Gew.-% einen von Null verschiedenen Teilchendurchmesser von ≥ 90 nm bis ≤ 500 nm, vorzugsweise von ≥ 110 bis 500 nm, aufweist,
c) die Gesamtmenge der wenigstens einen zuzusetzenden wäßrigen Polymerisatausgangsdispersion I vor Beginn der radikalischen wäßrigen Emulsionspolymerisation ins Polymerisationsgefäß vorgelegt wird,
d) in einer ersten Polymerisationsstufe in Gegenwart der vorgelegten wäßrigen Polymerisatausgangsdispersion I von der Gesamtmasse des wenigstens einen radikalisch zu polymerisierenden Monomeren, bezogen auf die Masse des vorgelegten Ausgangspolymerisats I, zunächst eine Teilmenge von 25 bis 500 Gew.-%, vorzugsweise 50 bis 300 Gew.-%, in an sich bekannter Weise bis zu einem auf diese Teilmenge bezogenen Umsatz von wenigstens 80 mol-%, vorzugsweise wenigstens 90 mol-%, polymerisiert wird,
e) die Polymerisation der Restmenge des wenigstens einen radikalisch zu polymerisierenden Monomeren im Anschluß an die erste Polymerisationsstufe nach dem Zulaufverfahren mit der Maßgabe erfolgt, daß ab Beginn des Zulaufverfahrens der Zulauf des wenigstens einen radikalisch polymerisierbaren Monomeren ins Polymerisationsgefäß so erfolgt, daß zu jedem Zeitpunkt des Zulaufs der Polymerisationsumsatz der bereits zuvor dem Polymerisationsgefäß insgesamt zugeführten Monomeren wenigstens 80 mol-% beträgt und
f) die zu jedem Zeitpunkt ab Beginn der radikalischen wäßrigen Emulsionspolymerisation im Polymerisationsgefäß enthaltene Menge an Dispergiermittel, bezogen auf die Summe der dem Polymerisationsgefäß bereits zugeführten Massen an Ausgangspolymerisat I und zu polymerisierenden Monomeren, 0,5 bis 5 Gew.-%, vorzugsweise 0,5 bis 3 Gew.-% beträgt.

Bemerkenswerterweise ist das erfindungsgemäße Verfahren nicht auf die radikalische wäßrige Emulsionspolymerisation von hauptsächlich oder ausschließlich aus Vinyl- und/oder Vinylidenhalogeniden zusammengesetzten Monomerengemischen beschränkt, ist doch allgemein bekannt, daß die Entwicklung der dispersen Phase im Fall von Vinyl- und/oder Vinylidenhalogeniden verschiedenen Monomeren ein wesentlich komplexeres Erscheinungsbild aufweist.

Für das erfindungsgemäße Verfahren kommen daher als radikalisch polymerisierbare Monomere unter anderen insbesondere monoethylenisch ungesättigte Monomere wie Olefine, z.B. Ethylen, vinylaromatische Monomere wie Styrol, α-Methylstyrol, o-Chlorstyrol oder Vinyltoluole, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methyacrylsäuremethyl, -ethyl, -n-butyl, -iso-butyl und -2-ethylhexylester, Maleinsäuredimethylester oder Maleinsäure-n-butylester, Nitrile α,β-monoethylenisch ungesättigter Carbonsäuren wie Acrylnitril sowie $C_{4-8}$-konjugierte Diene wie 1,3-Butadien und Isopren in Betracht. Die genannten Monomeren bilden in der Regel die Hauptmonomeren, die, bezogen auf die Gesamtmenge der nach dem Verfahren der radikalischen wäßrigen Emulsionspolymerisation zu polymerisierenden Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel von bis zu 20, vorzugsweise von 0,1 bis 10 Gew.-%, miteinpolymerisiert.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Monomere, die üblicherweise die innere Festigkeit der Verfilmungen der wäßrigen Polymerisatenddispersion erhöhen, werden in der Regel ebenfalls nur in untergeordneten Mengen, meist 0,5 bis 10 Gew.-% bezogen auf die Gesamtmenge der zu polymerisierenden Monomeren, miteinpolymerisiert. Normalerweise weisen derartige Monomere eine

Epoxy-, Hydroxy-, N-Methylol-, Carbonyl- oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit α,β-monoethylenisch ungesättigten Monocarbonsäuren unter denen wiederum die Acryl- und Methacrylsäure vorzugsweise eingesetzt werden. Beispiele für derartige, zwei nicht konjugierte ethylenisch ungesättigte Doppelbindungen aufweisende, Monomere sind Alkylenglycoldiacrylate- und dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat. Neben ungesättigte Doppelbindungen aufweisenden Monomeren können in untergeordneten Mengen, üblicherweise 0,01 bis 2 Gew.-% bezogen auf die zu polymerisierenden Monomeren, das Molekulargewicht regelnde Substanzen wie tert.-Dodecylmercaptan sowie 3-Mercaptopropyltrimethoxysilan miteinpolymerisiert werden. Vorzugsweise werden derartige Substanzen im Gemisch mit den zu polymerisierenden Monomeren der Polymerisationszone zugegeben.

Als Dispergiermittel kommen sowohl die zur Durchführung von radikalischen wäßrigen Emulsionspolymerisationen üblicherweise eingesetzten Schutzkolloide als auch Emulgatoren in Betracht. Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 50, Alkylrest: $C_4$ bis $C_9$), ethoxylierte Fettalkohole (EO-Grad: 0 bis 50, Alkylrest: $C_8$ bis $C_{36}$), sowie Alkali- und Ammoniumsalze von Alkylsulfaten (Alkylrest: $C_8$ bis $C_{12}$), von Schwefelsäurehalbestern ethoxylierter Alkanole (EO-Grad: 0 bis 30, Alkylrest: $C_{10}$ bis $C_{18}$) und ethoxylierter Alkylphenole (EO-Grad: 3 bis 50, Alkylrest: $C_4$ bis $C_{15}$), von Alkylsulfonsäuren (Alkylrest: $C_{12}$ bis $C_{18}$) und von Alkylarylsulfonsäuren (Alkylrest: $C_9$ bis $C_{18}$). Andere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192 bis 208.

Weitere geeignete grenzflächenaktive Substanzen sind auch Verbindungen der allgemeinen Formel I

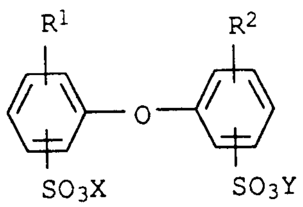

(I),

worin $R^1$ und $R^2$ Wasserstoff oder $C_4$- bis $C_{24}$-Alkyl bedeuten und nicht gleichzeitig Wasserstoff sind, und X und Y Alkalimetallionen und/oder Ammoniumionen sein können, erwiesen. In der Formel I bedeuten $R^1$ und $R^2$ bevorzugt lineare oder verzweigte Alkylreste mit 6 bis 18 C-Atomen oder Wasserstoff, und insbesondere mit 6,12 und 16 C-Atomen, wobei $R^1$ und $R^2$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen I in denen X und Y Natrium, $R^1$ ein verzweigter Alkylrest mit 12 C-Atomen und $R^2$ Wasserstoff oder $R^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen I sind allgemein bekannt, z.B. aus der US-A 4,269,749, und im Handel erhältlich. Mit Vorteil enthält die erfindungsgemäße wäßrige Polymerisatenddispersion, bezogen auf die Masse des Endpolymerisats, 1 bis 3 Gew.-% an grenzflächenaktiven Substanzen.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxidisulfate, als auch um Azoverbindungen handeln. Vorzugsweise werden kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure, und ganz besonders bevorzugt kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, eingesetzt, wobei anstelle von Ascorbinsäure auch häufig das Natriummetallsalz der Hydroxymethansulfinsäure, Natriumsulfit, Natriumhydrogensulfit oder Natriummetalldisulfit und anstelle von Wasserstoffperoxid tert. Butylhydroperoxid oder Alkalimetallperoxidisulfate und/oder Ammoniumperoxidisulfat angewendet werden. Anstelle eines wasserlöslichen Eisen(II)- salzes wird häufig auch ein V-Salz oder eine Kombination aus wasserlöslichen Fe/V-Salzen benutzt. Vorzugsweise beträgt die Menge der eingesetzten radikalischen Initiatorsysteme, bezogen auf die Gesamtmenge der zu polymerisierenden Monomeren, 0,1 bis 2 Gew.-%.

Die Art und Weise, in der das radikalische Initiatorsystem im Verlauf der erfindungsgemäßen radikalischen wäßrigen Emulsionspolymerisation dem Polymerisationsgefäß zugegeben wird, ist hinsichtlich des Erfolgs des erfindungsgemäßen Verfahrens eher von untergeordneter Bedeutung. Das Initiatorsystem kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise zugesetzt werden. Im einzelnen hängt dies in an sich dem Durchschnittsfachmann bekannter Weise sowohl von der chemischen Natur des Initiatorsystems als auch von der Polymerisationstemperatur ab.

Polymerisationsdruck und Polymerisationstemperatur sind gleichfalls von eher untergeordneter Bedeutung. Im allgemeinen arbeitet man bei Temperaturen zwischen Raumtemperatur und 100°C, vorzugsweise bei Temperaturen von 50 bis 95°C. Die Anwendung von erhöhtem oder vermindertem Druck ist möglich, so daß die Polymerisationstemperatur auch 100°C überschreiten und bis zu 130°C betragen kann. Vorzugsweise werden leichtflüchtige Monomere wie Ethylen, Butadien oder Vinylchlorid unter erhöhtem Druck polymerisiert. Zur pH-Wert Regulierung des Polymerisationsmediums kann während der erfindungsgemäßen radikalischen wäßrigen Emulsionspolymerisation beispielsweise Ammoniak oder ein Alkalimetallhydroxid zugegeben werden.

Die für die erfindungsgemäße radikalische wäßrige Emulsionspolymerisation beispielhaft als geeignet genannten radikalisch polymerisierbaren Monomeren eignen sich nicht nur als Konstituenten des erfindungsgemäß zu polymerisierenden Monomerengemisches. Vielmehr eignen sie sich in gleicher Weise wie die für die erfindungsgeimäße radikalische wäßrige Emulsionspolymerisation empfohlenen Polymerisationsinitiatoren, das Molekulargewicht regelnden Verbindungen und den pH-Wert regulierenden Mittel auch als Konstituenten der Ausgangspolymerisate I bzw. der diese enthaltenden Polymerisatausgangsdispersionen, wobei die Monomeren-, Regler- und Initiatorenzusammensetzung zur Herstellung der wäßrigen Polymerisatausgangsdispersionen I mit derjenigen für das erfindungsgemäße Verfahren sowohl deckungsgleich als auch verschieden sein kann. Die ebenda gemachten Aussagen gelten im übertragenen Sinn auch für die zur Herstellung der wäßrigen Polymerisatausgangsdispersionen I einzusetzenden grenzflächenaktiven Substanzen.

Die Herstellung wäßriger Polymerisatausgangsdispersionen I ist an sich bekannt. Entsprechende Lehren sind z.B. in Houben-Weyl, Methoden der Organischen Chemie, Band E20, Teil I, Makromolekulare Stoffe, Georg-Thieme Verlag, Stuttgart, 1987, Seiten 248 bis 268 zu finden. Zweckmäßigerweise stellt man zunächst eine feinteilige Polymerisatausgangsdispersion I' her, deren gewichtsmittlerer Teilchendurchmesser von > 0 bis ≤ 80 nm beträgt. Solche Polymerisatausgangsdispersionen I' sind in besonders einfacher Weise z.B. dadurch erhältlich, daß man die wäßrige Phase, die Monomeren, die radikalischen Initiatoren (normalerweise 0,1 bis 5 Gew.-%, bezogen auf die Menge der zu polymerisierenden Ausgangsmonomeren) und Dispergiermittel (üblicherweise 10 bis 50 Gew.-%, bezogen auf die Menge der zu polymerisierenden Ausgangsmonomeren) bei niederer Temperatur miteinander vermischt und nach Vermischen auf die Polymerisationstemperatur erwärmt und polymerisiert (zunehmende Mengen an Dispergiermittel bedingen in der Regel einen abnehmenden gewichtsmittleren Teilchendurchmesser). Bei einer anderen Variante umfaßt die Vorlage im wesentlichen alle Komponenten, der Polymerisationsinitiator wird jedoch nach Erwärmen auf die Reaktionstemperatur unter Aufrechterhalten derselben kontinuierlich zugeführt. Hinsichtlich Polymerisationstemperatur und Druck gelten die bezüglich des erfindungsgemäßen Verfahrens gemachten Aussagen.

Ausgehend von solchermaßen erhältlichen, üblicherweise 20 bis 40 gew.-%igen, relativ feinteiligen wäßrigen Polymerisatausgangsdispersionen I' sind grobteilige wäßrige Polymerisatausgangsdispersionen I beispielsweise dadurch erhältlich, daß man in einem Polymerisationsgefäß eine feinteilige wäßrige Polymerisatausgangsdispersion I' vorlegt, auf die Polymerisationstemperatur erwärmt und anschließend weitere Monomere, üblicherweise in wäßrigem Medium voremulgiert, und Polymerisationsinitiator unter Aufrechterhalten der Polymerisationstemperatur nach Maßgabe ihres Verbrauchs ins Polymerisationsgefäß zuführt. Die im Rahmen der wäßrigen Monomerenemulsion zugeführte Menge Emulgiermittel wird dabei so bemessen, daß die in der resultierenden grobteiligeren wäßrigen

Polymerisatausgangsdispersion I enthaltene Dispergiermittelgesamtmenge, bezogen auf das resultierende grobteilige Ausgangspolymerisat I, 0,5 bis 5, vorzugsweise 0,5 bis 3 Gew.-% beträgt. Häufig wird auch dem auf die Polymerisationstemperatur vorerwärmten Polymerisationsmedium eine Teilmenge der zum Vergröbern verwendeten Monomerenemulsion auf einmal zugesetzt, anschließend Polymerisationsinitiator zugegeben und anpolymerisiert, bevor die Restmenge der Monomerenemulsion sowie des Polymerisationsinitiators zugeführt wird. Die zu erzielende Teilchenvergröberung wird im wesentlichen durch das Mengenverhältnis von in der Vorlage enthaltenen feinteiligen Ausgangspolymerisat-I'-teilchen und zugegebenen Monomeren bestimmt. Selbstverständlich können der Prozeß der Herstellung einer relativ feinteiligen wäßrigen Polymerisatausgangsdispersion I' und der Prozeß der Vergröberung nahtlos ineinander übergehen. Die Angaben über die Polymerisatteilchendurchmesser der wäßrigen Polymerisatausgangsdispersionen I' und I beziehen sich hier stets auf Bestimmungen mittels der analytischen Ultrazentrifuge (W. Mächtle, Makromolekulare Chemie, Bd. 185 (1984), S. 1025-1039). Die Bestimmungen der Polymerisatteilchengrößenverteilung der wäßrigen Polymerisatenddispersionen wurden mit der sogenannten Coupling-PSD-Technik in der analytischen Ultrazentrifuge bestimmt (vgl. W. Mächtle, Angewandte Makromolekulare Chemie, Bd. 162 (1988) 35-42 (Nr. 2735)).

Mit Vorteil werden als wäßrige Polymerisatausgangsdispersionen I auch Mischungen verschiedener im wesentlichen monodisperser wäßriger Polymerisatausgangsdispersionen $I_n$ eingesetzt, deren Teilchendurchmesserverteilungsfunktionen im wesentlichen nicht überlappen. Üblicherweise ist ihre Monodispersität dergestalt, daß wenn $d_x$ den Durchmesser definiert, unterhalb dessen der Teilchendurchmesser von X Gew.-% aller in der jeweiligen wäßrigen Ausgangsdispersion $I_n$ vorhandenen Ausgangspolymerisatteilchen liegt, der Quotient $(d_{90}-d_{10})/d_{50}$ einen Wert von 0,1 bis 0,6 annimmt.

Ferner erfolgt das Abmischen so, daß zwischen dem durch Division der in der i-ten wäßrigen Polymerisatausgangsdispersion $I_i$ enthaltenen Masse des i-ten Ausgangspolymerisats $I_i$ mit der Massendichte des i-ten Ausgangspolymerisats $I_i$ erhältlichen Volumen $V_{I,i}$ und dem in entsprechender Weise bestimmten Volumen $V_{I,j}$ die Beziehung 1

$$V_{I,i} = V_{I,j} \cdot k \left(\frac{\bar{d}w}{\bar{d}w}\right)^2 \quad (1),$$

mit k= 1/1,5 bis 1,5, vorzugsweise 0,9 bis 1,1 und $\bar{d}_{w,In}$= gewichtsmittlerer Teilchendurchmesser, erfüllt ist. Anwendungstechnisch bevorzugt werden 2 bis 10, besonders bevorzugt 2 bis 5 Polymerisatausgangsdispersionen $I_n$ miteinander gemischt. Der Feststoffgehalt der wäßrigen Polymerisatausgangsdispersionen I beträgt üblicherweise 30 bis 60 Gew.-%.

Selbstverständlich kann die wäßrige Polymerisatausgangsdispersion I auch polydispers sein. Derartige wäßrige Polymerisatausgangsdispersionen I sind z.B. dadurch erhältlich, daß man bei der Vergröberung einer wäßrigen Polymerisatausgangsdispersion I' den Monomerenzusatz mit einem weiteren Zusatz an wäßriger Polymerisatausgangsdispersion I' begleitet (vgl. die ältere Anmeldung DE-A 42 13 965 (O.Z. 0050/43182)).

Nachdem die Polymerisatausgangsdispersion I im Polymerisationsgefäß vorliegt, schließt sich die Ausführung der ersten Polymerisationsstufe an. Die diesbezüglich benötigten Monomeren können dem Polymerisationsgefäß in an sich bekannter Weise auf einmal zugesetzt und/oder kontinuierlich zugeführt werden.

Werden Polymerisatenddispersionen mit besonders hoher Feststoffvolumenkonzentration angestrebt, ist es zweckmäßig die Monomeren in der zweiten Polymerisationsstufe dem Polymerisationsgefäß für sich zuzuführen. Ansonsten werden die radikalisch zu polymerisierenden Monomeren vorzugsweise in wäßriger Phase voremulgiert zugeführt, wobei die Menge des diesbezüglich verwendeten Emulgators, bezogen auf die Menge der emulgierten Monomeren, mit Vorteil 0,5 bis 3 Gew.-% beträgt. Normalerweise führt man synchron zum Monomerenzulauf dem Polymerisationsgefäß den zur Aufrechterhaltung der Polymerisation erforderlichen Polymerisationsinitiator, in der Regel als wäßrige Lösung, ebenfalls kontinuierlich zu. Dabei erstreckt sich die Initiatorzufuhr vorzugsweise etwas über die Dauer der Monomerenzufuhr hinaus. Selbstverständlich können die Herstellung der wäßrigen Polymerisatausgangsdispersion I und die nachfolgenden Polymerisationsstufen in ein und demselben Polymerisationsgefäß nahtlos ineinander übergehen. Natürlich kann im Verlauf des Zulaufsverfahrens dem Polymerisationsgefäß zusätzlicher Dispergiermittel, z.B. räumlich getrennt oder als Bestandteil der Monomerenemulsion, zugeführt werden.

Selbstverständlich kann sich im Verlauf der erfindungsgemäßen wäßrigen radikalischen Emulsionspolymerisation während des Zulaufverfahrens die Zusammensetzung der zuzuführenden Monomeren ändern. Ferner kann der Zulauf sowohl stufenförmig als auch kontinuierlich oder nach der Gradientenfahrweise erfolgen. Vorzugsweise erfolgt der Monomerenzulauf kontinuierlich.

Nach Beendigung des eigentlichen erfindungsgemäßen Polymerisationsverfahrens wird vorzugsweise noch einige Stunden unter Aufrechterhaltung der Polymerisationstemperatur nachgerührt. Daran können sich übliche Maßnahmen zur Restmonomerenentfernung, zur Einstellung eines anderen pH-Wertes oder sonstige Methoden zur Nachstabilisierung, inklusive nachträglicher Zugabe an Dispergiermitteln, anschließen. Selbstverständlich können die

verschiedenen möglichen, in der Regel räumlich getrennt erfolgenden, Zuläufe unmittelbar vor Eintritt in das Polymerisationsgefäß miteinander vermischt werden.

Bevorzugte Klassen von Endpolymerisaten sind solche, die

- zu 70 bis 100 Gew.-% aus Estern der Acryl- und/oder Methacrylsäure mit 1 bis 12 C-Atome aufweisenden Alkanolen und/oder Styrol
  oder
- zu 70 bis 100 Gew.-% aus Styrol und/oder Butadien aufgebaut sind, wobei die Klasse der Acrylate besonders bevorzugt ist.

Bei dem erfindungsgemäßen radikalischen wäßrigen Emulsionspolymerisationsverfahren werden in einfacher Weise wäßrige Polymerisatenddispersionen erhalten, die eine sehr breite Endpolymerisatteilchenverteilung aufweisen, welche in typischer Weise Elemente eines der beiden nachfolgenden Teilchenverteilungsraster ist:

2 bis 25 Gew.-% des Endpolymerisats ≤ 200 nm
10 bis 60 Gew.-% des Endpolymerisats ≤ 400 nm
15 bis 90 Gew.-% des Endpolymerisats ≤ 600 nm
50 bis 100 Gew.-% des Endpolymerisats ≤ 800 nm

oder

2 bis 15 Gew.-% des Endpolymerisats ≤ 200 nm
12 bis 50 Gew.-% des Endpolymerisats ≤ 400 nm
25 bis 60 Gew.-% des Endpolymerisats ≤ 600 nm
50 bis 95 Gew.-% des Endpolymerisats ≤ 800 nm
60 bis 100 Gew.-% des Endpolymerisats ≤ 1400 nm

Diese speziellen Teilchengrößenverteilungen sind vermutlich für den reduzierten Fließwiderstand der erfindungsgemäß resultierenden wäßrigen Polymerisatenddispersion verantwortlich, die normalerweise Newton'sches Fließverhalten aufweisen. Bemerkenswerterweise werden sie auch dann erhalten, wenn die wäßrigen Polymerisatausgangsdispersionen I keine Polymerisatteilchen mit einem Durchmesser < 110 nm enthalten.

Unterhalb einer Feststoffvolumenkonzentration von 50 Vol.-% nimmt der Einfluß der Teilchengrößenverteilung auf den Fließwiderstand zunehmend ab. Nach dem erfindungsgemäßen Verfahren werden wäßrige Polymerisatenddispersionen wie beschrieben in der Regel mit voll befriedigender Reproduzierbarkeit und in Abwesenheit von Ausflockungen mit Feststoffvolumenkonzentrationen von bis zu 75 Vol.-% in großtechnisch einfach realisierbarer Weise erhalten.

Besonders ausgeprägt entfaltet das erfindungsgemäße Polymerisationsverfahren seine vorteilhaften Eigenschaften bei Feststoffvolumenkonzentrationen oberhalb von 65 Vol.-%. Die nach diesem Verfahren erhältlichen wäßrigen Polymerisatenddispersionen eignen sich generell als Bindemittel sowie als Massen zur Herstellung von Beschichtungen und Verklebungen, wobei diesbezüglich in an sich bekannter Weise zusätzliche Hilfsstoffe wie Filmbildehilfsmittel, Füllstoffe oder Weichmacher zugesetzt werden können.

Beispiele

Beispiel 1

Herstellung einer wäßrigen Polymerisatausgangsdispersion I' (ADI')

Ein Gemisch aus

| | |
|---|---|
| 1,44 kg | n-Butylacrylat |
| 16,28 kg | Wasser |
| 1,27 kg | einer 45 gew.-%igen Dowfax 2A1 entsprechenden grenzflächenaktiven Substanz |
| 0,52 kg | einer 30 gew.-%igen wäßrigen Wasserstoffperoxidlösung |

wurde bei 25°C mit 25 Gew.-% des Zulaufs II auf einmal versetzt. Nachdem sich das Gemisch durch die einsetzende exotherme Polymerisation auf 50°C erwärmt hatte (nach ca. 10 min) wurden unter Aufrechterhalten der 50°C zeitgleich beginnend die Restmenge des Zulauf II (innerhalb von 3 h) und der Zulauf I (innerhalb von 2 h) kontinuierlich zugeführt.

Anschließend wurde noch 1 h bei 60°C nachgerührt.

Zulauf I:

| | |
|---|---|
| 47,0 kg | Wasser |
| 14,7 kg | n-Butylacrylat |
| 14,7 kg | Methylmethacrylat |
| 0,60 kg | Methacrylsäure |
| 0,664 kg | einer 45 gew.-%igen wäßrigen Lösung der Dowfax 2A1 entsprechenden grenzflächenaktiven Substanz |

Zulauf II:

| | |
|---|---|
| 10 kg | Wasser |
| 0,156 kg | Ascorbinsäure |
| 0,004 kg | Eisen(II)-sulfat. |

Es wurde eine wäßrige Polymerisatausgangsdispersion ADI' erhalten, die wie folgt charakterisiert war:

| | |
|---|---|
| Feststoffgehalt : | 30 Gew.-% |
| $\bar{d}_{w,I'}$ : | 40 nm |

$$\left(\frac{d_{90}-d_{10}}{d_{50}}\right)_{I'} \quad : 0,549$$

Beispiel 2

Herstellung wäßriger Polymerisatausgangsdispersionen I ($ADI_1$ bis $ADI_6$)

$ADI_1$: Ein Gemisch aus

35 kg Wasser
0,025 kg Ascorbinsäure
1,66 kg ADI' und
1,55 kg Zulauf I

wurde auf 85°C erwärmt und anschließend auf einmal mit 0,825 kg Zulauf II versetzt. Die einsetzende Polymerisation wurde unter Aufrechterhalten der 85°C während 10 min sich selbst überlassen.

Im Anschluß daran wurden unter Aufrechterhalten der 85°C die Restmenge des Zulauf I (innerhalb von 3 h) und die Restmenge des Zulauf II (innerhalb von 4 h) dem Polymerisationsgemisch zeitgleich beginnend kontinuierlich zugeführt. Anschließend wurde noch 1 h nachgerührt.

Zulauf I:

| | |
|---|---|
| 49 kg | n-Butylacrylat |
| 1 kg | Methacrylsäure |
| 1,79 kg | einer 28 gew.-%igen wäßrigen Lösung des Natriumsalzes des Schwefelsäurehalbesters von ethoxyliertem $C_{12}$-Fettalkohol (EO-Grad: 25) = Emulgatorlösung 1 |
| 0,4 kg | einer 25 gew.-%igen wäßrigen Natriumhydroxidlösung und |
| 25,2 kg | Wasser |

Zulauf II:

| | |
|---|---|
| 8 kg | Wasser |
| 0,25 kg | Natriumperoxidisulfat. |

Es wurde eine wäßrige Polymerisatausgangsdispersion $ADI_1$ erhalten, die wie folgt charakterisiert war:

| | |
|---|---|
| Feststoffgehalt: | 39,5 Gew.-% |
| $\bar{d}_{W,I1}$ : | 187 nm |

Polymerisatteilchen mit einem Durchmesser < 90 nm waren nicht nachweisbar.

$ADI_2$: Wie $ADI_1$, die Vorlage enthielt jedoch 1,77 kg ADI'.

Es wurde eine wäßrige Polymerisatausgangsdispersion $ADI_2$ erhalten, die wie folgt charakterisiert war:

| | |
|---|---|
| Feststoffgehalt: | 40 Gew.-% |
| $\bar{d}_{W,I2}$ : | 195 nm |

Polymerisatteilchen mit einem Durchmesser < 90 nm waren nicht nachweisbar.

$ADI_3$: Wie $ADI_1$, die Vorlage enthielt jedoch 0,667 kg ADI'.

Es wurde eine wäßrige Polymerisatausgangsdispersion $ADI_3$ erhalten, die wie folgt charakterisiert war:

| | |
|---|---|
| Feststoffgehalt: | 41,4 Gew.-% |
| $\bar{d}_{W,I3}$ : | 249 nm |

Polymerisatteilchen mit einem Durchmesser < 90 nm waren nicht nachweisbar.

$ADI_4$: Ein Gemisch aus

13,0 kg Wasser
0,025 kg Ascorbinsäure
0,68 kg ADI' und
1,35 kg Zulauf I

wurde auf 85°C erwärmt und anschließend auf einmal mit 0,825 kg Zulauf II versetzt. Die einsetzende Polymerisation wurde unter Aufrechterhalten der 85°C während 10 min sich selbst überlassen. Im Anschluß daran wurden unter Aufrechterhalten der 85°C zeitgleich beginnend die Restmengen der Zuläufe I (13,5 kg innerhalb von 60 min, die übrige Menge innerhalb von 2,5 h) und II (innerhalb von 4 h) sowie dazu 1 h zeitversetzt (nach hinten) Zulauf III (innerhalb von 60 min) dem Polymerisationsgemisch kontinuierlich zugeführt.

Zulauf I:

| | |
|---|---|
| 49,0 kg | n-Butylacrylat |
| 1,0 kg | Methacrylsäure |
| 1,79 kg | wäßrige Emulgatorlösung 1 |
| 0,2 kg | 25 gew.-%ige wäßrige Natriumhydroxidlösung |
| 15,6 kg | Wasser |

Zulauf II:

| | |
|---|---|
| 8,0 kg | Wasser |
| 0,25 kg | Natriumperoxidisulfat |

Zulauf III:

| | |
|---|---|
| 8,0 kg | Wasser |
| 0,050 kg | Ascorbinsäure |
| 0,200 kg | 25 gew.-%ige wäßrige Ammoniaklösung |
| 0,833 kg | ADI'. |

Es wurde eine wäßrige Polymerisatausgangsdispersion $ADI_4$ erhalten, die wie folgt charakterisiert war:

Feststoffgehalt: 50 Gew.-%

Polymerisatteilchen mit einem Durchmesser < 90 nm waren nicht nachweisbar.

$ADI_5$: Ein Gemisch aus

15,0 kg Wasser
0,23 kg ADI'
0,70 kg einer 30 gew.-%igen wäßrigen Wasserstoffperoxidlösung und
1,79 kg Zulauf I

wurde auf 70°C erwärmt und anschließend auf einmal mit 0,47 kg Zulauf II versetzt. Die einsetzende Polymerisation wurde unter Aufrechterhalten der 70°C während 5 min sich selbst überlassen. Im Anschluß daran wurden unter Aufrechterhalten der 70°C zeitgleich beginnend die Restmengen der Zuläufe I (3,6 kg in 30 min, die übrige Menge innerhalb von 3 h) und II (innerhalb von 4,5 h) sowie dazu 30 min zeitversetzt (nach hinten) Zulauf III (innerhalb von 60 min) dem Polymerisationsgemisch kontinuierlich zugeführt.

Zulauf I:

| | |
|---|---|
| 17,9 kg | Wasser |
| 68,6 kg | n-Butylacrylat |
| 1,4 kg | Methacrylsäure |
| 1,56 kg | einer 45 gew.-%igen wäßrigen Lösung der Dowfax 2A1 entsprechenden grenzflächenaktiven Substanz (Emulgatorlösung 2). |

Zulauf II:

| | |
|---|---|
| 4,5 kg | Wasser |
| 0,21 kg | Ascorbinsäure |
| 0,007 kg | Eisen-II-sulfat |

Zulauf III:

| | |
|---|---|
| 4,5 kg | Wasser |
| 0,233 kg | ADI' |
| 0,156 kg | der wäßrigen Emulgatorlösung 2. |

Anschließend wurde die wäßrige Polymerisatdispersion bei 20°C noch 1 h nachgerührt. Es wurde eine wäßrige Polymerisatausgangsdispersion $ADI_5$ erhalten, die wie folgt charakterisiert war:

Feststoffgehalt: 61 Gew.-%

Polymerisatteilchen mit einem Durchmesser < 90 waren nicht nachweisbar.

$ADI_6$: Eine Mischung aus

2,56 kg $ADI_1$
3,31 kg $ADI_2$ und
4,13 kg $ADI_3$.

Beispiel 3

Herstellung wäßriger Polymerisatenddispersionen ED1 bis ED17

ED1: Ein Gemisch aus

343 g Wasser
41,6 g Zulauf I
0,9 g Ascorbinsäure und
54 g $ADI_4$

wurde auf 85°C erwärmt und anschließend auf einmal mit 25,9 g Zulauf II versetzt. Die einsetzende Polymerisation wurde unter Aufrechterhalten der 85°C während 10 min sich selbst überlassen. Im Anschluß daran wurden unter Aufrechterhalten der 85°C zeitgleich beginnend die Restmengen der Zuläufe I (innerhalb von 3 h) und II (innerhalb von 4 h) kontinuierlich zugeführt und das Polymerisationsgemisch anschließend noch 1 h bei 85°C gehalten. Zur Beseitigung von Restmonomeren wurde das Polymerisationsgemisch auf 60°C abgekühlt und anschließend auf einmal mit Zulauf III und sodann innerhalb von 1 h unter Aufrechterhaltung der 60°C kontinuierlich mit Zulauf IV versetzt.

Zulauf I:

| | |
|---|---|
| 1575 g | n-Butylacrylat |
| 180 g | Acrylnitril |
| 45 g | Acrylsäure |
| 0,9 g | Ascorbinsäure |
| 14,4 g | 25 gew.-%ige wäßrige NaOH-Lösung |

| | |
|---|---|
| 64,3 g | wäßrige Emulgatorlösung 1 |
| 200 g | Wasser |

Zulauf II:

| | |
|---|---|
| 9 g | Natriumperoxidisulfat |
| 250 g | Wasser |

Zulauf III:

36 g einer 10 gew.-%igen wäßrigen tert.-Butylhydroperoxidlösung

Zulauf IV:

| | |
|---|---|
| 1,8 g | einer 1 gew.-%igen wäßrigen $VOSO_4$-Lösung |
| 50 g | Wasser |
| 3,6 g | Natriumsalz der Hydroxymethansulfinsäure. |

ED2: Wie ED1, die Vorlage umfaßte jedoch

350 g Wasser
41,8 g Zulauf I
0,9 g Ascorbinsäure
54 g $ADI_4$

und nach Erwärmen auf die hier 90°C betragende Polymerisationstemperatur wurden auf einmal 52,5 g Zulauf II zugesetzt.

Zulauf I:

| | |
|---|---|
| 1440 g | 2-Ethylhexylacrylat |
| 144 g | Vinylacetat |
| 144 g | Methylmethacrylat |
| 36 g | n-Hydroxypropylacrylat |
| 36 g | Styrol |
| 9 g | Acrylsäure |
| 0,9 g | Ascorbinsäure |
| 1,8 g | tert.-Dodecylmercaptan |
| 14,4 g | 25 gew.-%ige wäßrige NaOH-Lösung |
| 64,3 g | wäßrige Emulgatorlösung 1 |
| 200 g | Wasser |

Zulauf II:

| | |
|---|---|
| 12,6 g | Natriumperoxidisulfat |
| 250 g | Wasser |

Zulauf III und Zulauf IV wie bei ED1.

ED3: Wie ED1, die Vorlage umfaßte jedoch

295 g Wasser
44,8 g Zulauf I
1 g Ascorbinsäure
75,0 g $ADI_1$

und nach Erwärmen auf 85°C wurden auf einmal 26,0 g Zulauf II zugesetzt.

Zulauf I:

| | |
|---|---|
| 1960 g | n-Butylacrylat |
| 50 g | Methacrylsäure |
| 71,4 g | wäßrige Emulgatorlösung 1 |
| 1 g | Ascorbinsäure |
| 16,0 g | 25 gew.-%ige wäßrige NaOH-Lösung |
| 150 g | Wasser. |

Zulauf II:

| | |
|---|---|
| 10 g | Natriumperoxidisulfat |
| 250 g | Wasser. |

Kein Zulauf III und kein Zulauf IV.

ED4: Wie ED1, die Vorlage umfaßte jedoch

272 g Wasser
44,8 g Zulauf I
1,0 g Ascorbinsäure
125 g $ADI_3$

und nach Erwärmen auf 85°C wurden auf einmal 26,0 g Zulauf II zugesetzt.

Zulauf I:

| | |
|---|---|
| 1960 g | n-Butylacrylat |
| 40 g | Methacrylsäure |
| 71,4 g | wäßrige Emulgatorlösung 1 |
| 1 g | Ascorbinsäure |
| 16 g | 25 gew.-%ige wäßrige NaOH-Lösung |
| 150 g | Wasser |

Zulauf II:

| | |
|---|---|
| 10 g | Natriumperoxidisulfat |
| 250 g | Wasser |

Kein Zulauf III und kein Zulauf IV.

ED5: Wie ED4, die Vorlage umfaßte jedoch anstelle von 125 g $ADI_3$ dieselbe Menge $ADI_6$.

ED6: Wie ED1, die Vorlage umfaßte jedoch

166 g Wasser
44,8 g Zulauf I
1,0 g Ascorbinsäure
200 g $ADI_6$

und nach Erwärmen auf die hier 90°C betragende Polymerisationstemperatur wurden auf einmal 52,8 g Zulauf II zugesetzt.

Zulauf I:

| | |
|---|---|
| 1900 g | n-Butylacrylat |
| 60 g | Methylmethacrylat |
| 40 g | Methacrylsäure |
| 1 g | tert.-Dodecylmercaptan |
| 16 g | 25 gew.-%ige wäßrige NaOH-Lösung |
| 1 g | Ascorbinsäure |
| 71,4 g | wäßrige Emulgatorlösung 1 |
| 150 g | Wasser |

Zulauf II:

| | |
|---|---|
| 14 g | Natriumperoxidisulfat |
| 250 g | Wasser |

Zulauf III:

40 g einer 10 gew.-%igen wäßrigen tert.-Butylhydroperoxidlösung

Zulauf IV:

| | |
|---|---|
| 4 g | Natriumsalz der Hydroxymethansulfinsäure |
| 2 g | einer 1 gew.-%igen wäßrigen $VOSO_4$-Lösung |
| 40 g | Wasser |

ED7: Wie ED6, anstelle von 200 g $ADI_6$ und 166 g Wasser umfaßte die Vorlage jedoch 125 g $ADI_6$ und 184 g Wasser. Ferner enthielt Zulauf I nicht 71,4 g wäßrige Emulgatorlösung 1, sondern 114,29 g einer 35 gew.-%igen wäßrigen Lösung des Natriumsalzes des Schwefelsäurehalbester von ethoxyliertem Alkylphenol (Alkylrest: $C_{12}$; EO-Grad: 25) = Emulgatorlösung 3.

ED8: Wie ED6, die Vorlage umfaßte jedoch

221 g Wasser
44,6 g Zulauf I
1,0 g Ascorbinsäure
100 g $ADI_4$

und Zulauf I wies folgende Zusammensetzung auf:

| | |
|---|---|
| 1000 g | 2-Ethylhexylacrylat |
| 600 g | n-Butylacrylat |
| 160 g | Methylacrylat |
| 160 g | Methylmethacrylat |
| 40 g | Styrol |
| 40 g | Methacrylsäure |
| 35,7 g | wäßrige Emulgatorlösung 1 |
| 1 g | Ascorbinsäure |
| 16 g | 25 gew.-%ige NaOH-Lösung |
| 175 g | Wasser |

ED9: Ein Gemisch aus

221 g Wasser
1,0 g Ascorbinsäure
75 g $ADI_6$

wurde auf 90°C erwärmt und anschließend auf einmal mit 52,8 g Zulauf II versetzt. Anschließend wurden unter Aufrechterhaltung der 90°C Zulauf I (44,8 g innerhalb von 20 min und Restmenge innerhalb von 3 h) und, 20 min nach Zulauf I beginnend, Zulauf II (innerhalb von 4 h) kontinuierlich zugeführt und das Polymerisationsgemisch anschließend noch 30 min bei 90°C gehalten. Zur Beseitigung von Restmonomeren wurde das Polymerisationsgemisch auf 60°C abgekühlt und auf einmal mit Zulauf III und sodann innerhalb 1 h unter Aufrechterhaltung der 60°C kontinuierlich mit Zulauf IV versetzt.

Zulauf I:

| | |
|---|---|
| 1960 g | n-Butylacrylat |
| 40 g | Methacrylsäure |
| 71,4 g | wäßrige Emulgatorlösung 1 |
| 1,0 g | Ascorbinsäure |
| 16 g | 25 gew. -%ige Natriumhydroxidlösung |
| 150 g | Wasser |

Zulauf II:

| | |
|---|---|
| 14 g | Natriumperoxidisulfat |
| 250 g | Wasser |

Zulauf III:

40 g einer 10 gew.-%igen wäßrigen Lösung von tert.-Butylhydroperoxid

Zulauf IV:

| | |
|---|---|
| 4 g | Natriumsalz der Hydroxymethansulfinsäure |
| 40 g | Wasser |
| 2 g | 1 gew.-%ige wäßrige $VOSO_4$-Lösung |

ED10: Wie ED9, innerhalb der ersten 20 min wurden jedoch 89,6 g Zulauf I kontinuierlich zugeführt.

ED11: Wie ED6, die Vorlage umfaßte jedoch

221 g Wasser
22,38 g Zulauf I
1 g Ascorbinsäure
75 g $ADI_6$

und Zulauf I bestand aus

| | |
|---|---|
| 1960 g | n-Butylacrylat |
| 40 g | Methacrylsäure |
| 71,4 g | wäßrige Emulgatorlösung 1 |
| 1 g | Ascorbinsäure |
| 16 g | 25 gew.-%ige wäßrige Natriumhydroxidlösung |
| 150 g | Wasser |

ED12: Wie ED6, die Vorlage umfaßte jedoch nicht 22,38 g Zulauf I, sondern 67 g Zulauf I.
ED13: Wie $ED_6$, die Vorlage umfaßte jedoch nicht 22,38 g Zulauf I, sondern 89 g Zulauf I.
ED14: Ein Gemisch aus

10,0 kg Wasser
1,95 kg Zulauf I
0,8 kg 30 gew.-%ige wäßrige $H_2O_2$-Lösung
2,0 kg $ADI_5$

wurde auf 70°C erwärmt und anschließend auf einmal mit 0,425 kg Zulauf II versetzt. Die einsetzende Polymerisation wurde unter Aufrechterhalten der 70°C während 10 min sich selbst überlassen. Im Anschluß daran wurden unter Aufrechterhalten der 70°C zeitgleich beginnend die Restmengen der Zuläufe I (3,9 kg innerhalb von 30 min, Rest danach innerhalb von 3 h) und II (innerhalb von 4,5 h) kontinuierlich zugeführt.

Zulauf I:

| | |
|---|---|
| 78,4 kg | n-Butylacrylat |
| 1,6 kg | Methacrylsäure |
| 1,6 kg | wäßrige Emulgatorlösung 2 |
| 0,286 kg | wäßrige Emulgatorlösung 1 |
| 15,6 kg | Wasser |

Zulauf II:

| | |
|---|---|
| 0,24 kg | Ascorbinsäure |
| 0,008 kg | $FeSO_4$ |
| 4 kg | Wasser |

ED15: Ein Gemisch aus

10 kg Wasser
2 kg $ADI_5$
1,88 kg Zulauf I
2,29 kg Zulauf II

wurde auf 80°C erhitzt und anschließend auf einmal mit 0,425 kg Zulauf III versetzt. Die einsetzende Polymerisation wurde unter Aufrechterhalten der 80°C während 10 min sich selbst überlassen. Im Anschluß daran wurden unter Aufrechterhalten der 80°C zeitgleich beginnend die Restmengen der Zuläufe I (3,8 kg innerhalb von 30 min, Rest in 3 h), II (innerhalb von 4,5 h) und III (innerhalb von 4,5 h) kontinuierlich zugeführt.

Zulauf I:

| | |
|---|---|
| 78,4 kg | n-Butylacrylat |
| 1,6 kg | Methacrylsäure |
| 1,6 kg | wäßrige Emulgatorlösung 2 |
| 0,286 kg | wäßrige Emulgatorlösung 1 |
| 12,0 kg | Wasser |

Zulauf II:

| | |
|---|---|
| 0,457 kg | einer 70 gew.-%igen wäßrigen tert.-Butylhydroperoxidlösung |
| 4,0 kg | Wasser |

Zulauf III:

| | |
|---|---|
| 0,24 kg | Ascorbinsäure |
| 0,008 kg | $FeSO_4$ |
| 4,0 kg | Wasser |

ED16: Ein Gemisch aus

291 g Wasser
1,575 g Ascorbinsäure
0,021 g $FeSO_4$
10,5 g 10 gew.-%ige wäßrige $H_2SO_4$

wurde auf 85°C erhitzt und anschließend auf einmal mit 31,05 g Zulauf II versetzt. Unmittelbar darauf wurden zeitgleich beginnend Zulauf I (104 g in 24 min, Rest innerhalb von 210 min) und die Restmenge von Zulauf II (innerhalb von 4 h 15 min) unter Aufrechterhaltung der 85°C kontinuierlich zugeführt.

Zulauf I:

| | |
|---|---|
| 367 g | Wasser |
| 121 g | 40 gew.-%ige wäßrige Lösung des Natriumsalzes des Schwefelsäurehalbesters von ethoxyliertem i-Octylphenol (EO-Grad: 4) = Emulgatorlösung 4 |
| 0,525 g | Ascorbinsäure |
| 33,6 g | 25 gew.-%ige wäßrige NaOH-Lösung |
| 1764 g | n-Butylacrylat |
| 262,5 g | Methylmethacrylat |
| 31,5 g | 2-Ethylhexylacrylat |
| 42 g | Acrylsäure |

Zulauf II:

| | |
|---|---|
| 300 g | $H_2O$ |
| 10,5 g | Natriumperoxidisulfat |

ED17: Ein Gemisch aus

1,0 g Ascorbinsäure
75,0 g $ADI_3$
44,8 g Zulauf I
295 g Wasser

wurde auf 85°C erhitzt und anschließend auf einmal mit 26 g Zulauf II versetzt. Die einzusetzende Polymerisation wurde unter Aufrechterhaltung der 85°C während 10 min sich selbst überlassen. Im Anschluß daran wurden unter Aufrechterhaltung der 85°C zeitgleich beginnend die Restmengen der Zuläufe I (innerhalb von 3 h) und II (innerhalb von 4 h) kontinuierlich zugeführt.

Zulauf 1:

| | |
|---|---|
| 1960 g | n-Butylacrylat |
| 40 g | Methacrylsäure |
| 71,4 g | wäßrige Emulgatorlösung 1 |
| 1 g | Ascorbinsäure |
| 16 g | 25 gew.-%ige wäßrige NaOH-Lösung |
| 150 g | Wasser |

Zulauf 2:

| | |
|---|---|
| 10 g | Natriumperoxidisulfat |
| 250 g | Wasser |

Tabelle 1 gibt den Feststoffgehalt und die Volumenkonzentration der Enddispersionen ED1 bis ED17 (Gew.-% bzw. Vol-%) sowie ihre dynamischen Viskositäten η in mPa • s wieder, wobei die η-Bestimmungen gemäß DIN 53019 bei 23°C und einem Schergefälle von 487 $s^{-1}$ erfolgten.

Tabelle 2 gibt zusätzlich die Endpolymerisatteilchengrößenverteilungen wieder (Gew.-% der Teilchen des Endpolymerisats, deren Teilchendurchmesser ≤ X nm ist, wobei X ein Element aus der Menge {200, 400, 600, 800, 1000, 1200, 1400} ist).

Tabelle 1

| | Enddispersionen ED | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| Feststoffgehalt | 65,5 | 64,7 | 71,1 | 71,4 | 71,3 | 71,6 | 70,8 | 70,0 | 71,1 | 71,3 | 70,7 | 71,5 | 71,8 | 70,0 | 70,5 | 65,7 | 71,4 |
| Volumenkonzentration | 60,1 | 62,6 | 65,7 | 66,0 | 65,9 | 66,2 | 65,5 | 66,8 | 65,7 | 65,9 | 65,5 | 66,1 | 66,3 | 65,1 | 65,4 | 60,3 | 66,0 |
| η | 120 | 80 | 360 | 92 | 140 | 800 | 350 | 380 | 490 | 620 | 200 | 240 | 230 | 210 | 190 | 120 | 110 |

Tabelle 2

| ED ( ) | 200 | 400 | 500 | 800 | 1000 | 1200 | 1400 |
|---|---|---|---|---|---|---|---|
| 1 | 4 | 43 | 57 | 90 | 100 | | |
| 2 | 15 | 60 | 70 | 100 | | | |
| 3 | 8 | 23 | 78 | 100 | | | |
| 4 | 6 | 25 | 28 | 78 | 100 | | |
| 5 | 17 | 18 | 38 | 100 | | | |
| 6 | 12 | 18 | 74 | 100 | | | |
| 7 | 8 | 12 | 25 | 95 | 100 | | |
| 8 | 4 | 26 | 50 | 100 | | | |
| 9 | 4 | 35 | 36 | 70 | 95 | 100 | |
| 10 | 8 | 42 | 44 | 100 | | | |
| 11 | 6 | 22 | 26 | 75 | 100 | | |
| 12 | 12 | 23 | 28 | 80 | 100 | | |
| 13 | 7 | 22 | 26 | 78 | 100 | | |
| 14 | 12 | 48 | 58 | 67 | 77 | 95 | 100 |
| 15 | 4 | 28 | 38 | 54 | 66 | 88 | 100 |
| 16 | 23 | 25 | 90 | 100 | | | |
| 17 | 11 | 25 | 28 | 95 | 100 | | |

**Patentansprüche**

**1.** Verfahren zur Herstellung einer eine Feststoffvolumenkonzentration von wenigstens 50 Vol.-% aufweisenden Polymerisatenddispersion durch Polymerisation wenigstens eines von Vinyl- und Vinylidenhalogeniden verschiedenen radikalisch polymerisierbaren Monomeren unter Zusatz wenigstens einer wäßrigen Polymerisatausgangsdispersion I in einem Polymerisationsgefäß nach dem Verfahren der radikalischen wäßrigen Emulsionspolymerisation in Gegenwart von Dispergiermitteln und radikalischen Polymerisationsinitiatoren, dadurch gekennzeichnet, daß

a) die in der wenigstens einen zugesetzten wäßrigen Polymerisatausgangsdispersion I enthaltene Masse an Ausgangspolymerisat I, bezogen auf die Gesamtmasse, gebildet aus der Masse des wenigstens einen radikalisch polymerisierbaren Monomeren und der in Form der wäßrigen Polymerisatausgangsdispersion I zugesetzten Masse an Ausgangspolymerisat I, 0,1 bis 10% beträgt,

b) das Ausgangspolymerisat I in der wenigstens einen wäßrigen Ausgangsdispersion I in Form dispers verteilter Ausgangspolymerisatteilchen vorliegt, von deren Gesamtmasse wenigstens 99,6 Gew.-% einen von Null verschiedenen Teilchendurchmesser von ≥ 90 nm bis ≤ 500 nm aufweist,

c) die Gesamtmenge der wenigstens einen zuzusetzenden wäßrigen Polymerisatausgangsdispersion I vor Beginn der radikalischen wäßrigen Emulsionspolymerisation ins Polymerisationsgefäß vorgelegt wird,

d) in einer ersten Polymerisationsstufe in Gegenwart der vorgelegten wäßrigen Polymerisatausgangsdispersion I von der Gesamtmasse des wenigstens einen radikalisch zu polymerisierenden Monomeren, bezogen auf die Masse des vorgelegten Ausgangspolymerisats I, zunächst eine Teilmenge von 25 bis 500 Gew.-% in an sich bekannter Weise bis zu einem auf diese Teilmenge bezogenen Umsatz von wenigstens 80 mol-% polymerisiert wird,

e) die Polymerisation der Restmenge des wenigstens einen radikalisch zu polymerisierenden Monomeren im Anschluß an die erste Polymerisationsstufe nach dem Zulaufverfahren mit der Maßgabe erfolgt, daß ab Beginn des Zulaufverfahrens der Zulauf des wenigstens einen radikalisch polymerisierbaren Monomeren ins Polymerisationsgefäß so erfolgt, daß zu jedem Zeitpunkt des Zulaufs der Polymerisationsumsatz der bereits zuvor dem Polymerisationsgefäß insgesamt zugeführten Monomeren wenigstens 80 mol-% beträgt und

f) die zu jedem Zeitpunkt ab Beginn der radikalischen wäßrigen Emulsionspolymerisation im Polymerisationsgefäß enthaltene Menge an Dispergiermittel, bezogen auf die Summe der dem Polymerisationsgefäß bereits zugeführten Massen an Ausgangspolymerisat I und zu polymerisierenden Monomeren, 0,5 bis 5 Gew.-% beträgt.

## Claims

**1.** A process for preparing a final polymer dispersion having a solids volume concentration of at least 50% by volume by polymerizing at least one free-radically polymerizable monomer other than a vinyl or vinylidene halide with the addition of at least one aqueous starting polymer dispersion I in a polymerization vessel by the method of free radical aqueous emulsion polymerization in the presence of dispersants and free radical polymerization initiators, wherein

a) the mass of starting polymer I present in the at least one added aqueous starting polymer dispersion I is, relative to the total mass, comprising the mass of the at least one free-radically polymerizable monomer and the mass of starting polymer I added in the form of the aqueous starting polymer dispersion I, from 0.1 to 10%,
b) the starting polymer I is present in the at least one aqueous starting dispersion I in the form of dispersed starting polymer particles of whose total mass at least 99.6% by weight have a non-zero particle diameter of ≥ 90 nm to ≤ 500 nm,
c) the total amount of the at least one aqueous starting polymer dispersion I to be added is introduced into the polymerization vessel as initial charge prior to the start of free radical aqueous emulsion polymerization,
d) in a first polymerization stage, in the presence of the initial charge of aqueous starting polymer dispersion I, initially an aliquot of from 25 to 500% by weight of the total mass of the at least one monomer to be free-radically polymerized, based on the mass of the initial charge of starting polymer I, is polymerized in a conventional manner to a conversion of at least 80 mol%, based on this aliquot,
e) following the first polymerization stage the polymerization of the remainder of the at least one monomer to be free-radically polymerized is effected by the feed stream addition method with the proviso that from the start of the feed stream addition method the addition of the at least one free-radically polymerizable monomer to the polymerization vessel is effected in such a way that at any time of the addition the polymerization conversion of the total monomers already added previously to the polymerization vessel is at least 80 mol%, and
f) the amount of dispersant present in the polymerization vessel is at any time from the start of the free radical aqueous emulsion polymerization from 0.5 to 5% by weight, based on the sum of the masses already introduced into the polymerization vessel of starting polymer I and of monomers to be polymerized.

## Revendications

**1.** Procédé de préparation d'une dispersion finale de polymère présentant une concentration en volume de matière solide d'au moins 50% en volume, par polymérisation d'au moins un monomère polymérisable de façon radicalaire et différent des halogénures de vinyle et de vinylidène, par ajout d'au moins une dispersion aqueuse de départ de polymère I dans un récipient de polymérisation selon le procédé de polymérisation radicalaire en émulsion aqueuse en présence d'agents dispersants et d'amorceurs de polymérisation radicalaire, caractérisé en ce que

a) la masse de polymère de départ I contenue dans ladite au moins une dispersion aqueuse de départ de polymère I ajoutée s'élève à 0,1-10%, par rapport à la masse totale, formée de la masse dudit au moins un monomère polymérisable de façon radicalaire et de la masse de polymère de départ I ajoutée sous la forme de la dispersion aqueuse de départ de polymère I,
b) le polymère de départ I, dans lequel au moins une dispersion aqueuse de départ I se trouve sous forme de particules divisées et dispersées de polymère de départ, dont au moins 99,6% en poids de la masse totale présente une granulométrie non nulle ≥ 90 nm à ≤ 500 nm,
c) la quantité totale de ladite au moins une dispersion aqueuse de départ de polymère I ajoutée est introduite dans le récipient de polymérisation avant le début de la polymérisation radicalaire en émulsion aqueuse,
d) dans une première étape de polymérisation, on polymérise tout d'abord une fraction de la masse totale dudit au moins un monomère à polymériser de façon radicalaire s'élevant à 25-500% en poids, par rapport à la masse du polymère de départ I introduit, on présence de la dispersion aqueuse de départ de polymère I ajoutée, de façon connue en soi jusqu'à un taux de conversion correspondant à cette fraction et d'au moins 80% en moles,
e) la polymérisation de la quantité restante dudit au moins un monomère à polymériser de façon radicalaire est effectuée à la suite de la première étape de polymérisation, après le processus d'alimentation, étant spécifié que, à partir du début de ce processus d'alimentation, l'introduction dudit au moins un monomère polymérisable de façon radicalaire dans le récipient de polymérisation est réalisée de sorte que à chaque instant de l'introduction, le taux de conversion de la polymérisation de la totalité des monomères déjà ajoutés dans le récipient de polymérisation s'élève à au moins 80% on moles et

f) la quantité d'agents dispersants contenue dans le récipient de polymérisation à chaque instant à partir du début de la polymérisation radicalaire on émulsion aqueuse s'élève à 0,5-5% en poids, par rapport à la somme des masses de polymère de départ I et de monomère à polymériser déjà ajoutés dans le récipient de polymérisation.